(19) Europäisches Patentamt
European Patent Office
Office européen des brevets

(11) EP 4 428 944 A2

(12) **EUROPEAN PATENT APPLICATION**

(43) Date of publication:
**11.09.2024 Bulletin 2024/37**

(21) Application number: **24162205.9**

(22) Date of filing: **07.03.2024**

(51) International Patent Classification (IPC):
*H01M 4/133* [(2010.01)]    *H01M 4/134* [(2010.01)]
*H01M 4/36* [(2006.01)]    *H01M 4/62* [(2006.01)]
*H01M 10/0525* [(2010.01)]    *H01M 4/1393* [(2010.01)]
*H01M 4/02* [(2006.01)]    *H01M 4/04* [(2006.01)]

(52) Cooperative Patent Classification (CPC):
**H01M 4/133; H01M 4/1393; H01M 10/0427;
H01M 10/0525;** H01M 4/0404; H01M 2004/021;
H01M 2004/027; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2023 CN 202310216926**

(71) Applicant: **Ningde Amperex Technology Ltd.
Ningde City, Fujian 352100 (CN)**

(72) Inventor: **JIN, Wenbo
Ningde City, Fujian Province, People s Republic
of
China, 352100 (CN)**

(74) Representative: **Icosa
83 avenue Denfert-Rochereau
75014 Paris (FR)**

(54) **NEGATIVE ELECTRODE MATERIAL, NEGATIVE ELECTRODE PLATE, SECONDARY BATTERY, AND ELECTRIC APPARATUS**

(57) This application provides a negative electrode material, a negative electrode plate, a secondary battery, and an electric apparatus. A button battery containing such negative electrode material has a charge gram capacity of Cap.C mAh/g and a discharge gram capacity of Cap.D mAh/g, $13 \leq$ Cap.C-Cap.D $\leq 18$, where $335.0 \leq$ Cap.C $\leq 355.0$ and $320.0 \leq$ Cap.D $\leq 340.0$. The secondary battery using such negative electrode material has excellent cycling performance.

EP 4 428 944 A2

**Description**

**TECHNICAL FIELD**

This application relates to the electrochemical field, and specifically, to a negative electrode material, a negative electrode plate, a secondary battery, and an electric apparatus.

**BACKGROUND**

With advantages such as high energy density, low self-discharge, no memory effect, and long cycle life, secondary batteries (for example, lithium-ion batteries) are widely used in portable electronic devices, electric vehicles, energy storage devices, and other fields.

The cycling performance of secondary batteries affects the service life of the batteries, and also correlates with the cost of the secondary batteries to some extent. On a basis of same price, more cycles mean a lower cost for a single cycle, so the market prefers products with better cycling performance at the same price. How the cycling performance of secondary batteries is improved has become a problem to be solved urgently.

**SUMMARY**

This application is intended to provide a negative electrode material, a negative electrode plate, a secondary battery, and an electric apparatus, so as to improve the cycling performance of secondary batteries. Specific technical solutions are as follows.

A first aspect of this application provides a negative electrode material. A button battery containing the negative electrode material has a charge gram capacity of Cap.C mAh/g and a discharge gram capacity of Cap.D mAh/g, where $13 \leq$ Cap.C-Cap.D $\leq 18$, $335.0 \leq$ Cap.C $\leq 355.0$, and $320.0 \leq$ Cap.D $\leq 340.0$. In this application, with Cap.C and Cap.D of the negative electrode material and their relationship jointly controlled within the foregoing ranges, a secondary battery using this negative electrode material has excellent cycling performance.

In an embodiment of this application, a compacted density of the negative electrode material is CD g/cm$^3$ after being pressed under a pressure of $5 \times 10^3$ kg, satisfying $1.60 \leq$ CD $\leq$ Cap.D/187.88. This helps obtain a negative electrode plate with a high compacted density and a secondary battery with a high energy density. This also allows graphite particles in the negative electrode material to have an appropriate degree of sp$^3$ hybridization, helping obtain a secondary battery with excellent cycling performance.

In an embodiment of this application, a specific surface area of the negative electrode material is BET m$^2$/g, where the specific surface area and a particle size distribution of $D_n10$ of the negative electrode material satisfy $0.5 \leq 0.5 \times$ BET-$D_n10 \leq 2$. With the BET and $D_n10$ of the negative electrode material controlled within the foregoing range, the cycling performance of the secondary battery can be improved.

In an embodiment of this application, $0.8 \ \mu m \leq D_n10 \leq 1.4 \ \mu m$. In an embodiment of this application, a specific surface area BET m$^2$/g of the negative electrode material is 3.0 m$^2$/g to 6.0 m$^2$/g. In an embodiment of this application, $30 \ \mu m \leq D_v99 \leq 45 \ \mu m$.

In an embodiment of this application, the particle size distribution of the negative electrode material satisfies $D_v99 \leq 3.0 \times D_v50 \leq 50.0 \ \mu m$ and $D_v90/D_v50 \leq 2.5$. With $D_v50$, $D_v90$, and $D_v99$ of the negative electrode material jointly controlled to satisfy the foregoing relationships, the negative electrode material achieves a good particle distribution, helping improve the kinetic performance and processability of the secondary battery.

In an embodiment of this application, a degree of graphitization of the negative electrode material is G, satisfying $84.0\% \leq$ G $\leq 97.0\%$. This is conducive to rapid deintercalation of active ions (for example, lithium ions or sodium ions) from particles of the negative electrode material, thereby improving the kinetic and cycling performance of the secondary battery.

In an embodiment of this application, a tap density of the negative electrode material is TD g/cm$^3$, where $0.8 \leq$ TD $\leq 1.2$, and an OI value of the negative electrode material is 3 to 8. In this application, with the tap density and OI value of the negative electrode material controlled within the foregoing ranges, the cycling performance of the secondary battery can be improved.

In an embodiment of this application, the negative electrode material satisfies at least one of the following conditions: (1) $15 \leq$ Cap.C-Cap.D $\leq 18$; (2) $0.8 \leq 0.5 \times$ BET-$D_n10 \leq 1.7$; or (3) $1.7 \leq D_v90/D_v50 \leq 2.1$, allowing the secondary battery to have excellent cycling performance.

A second aspect of this application provides a negative electrode plate including the negative electrode material according to any one of the foregoing embodiments.

In an embodiment of this application, a compacted density of the negative electrode plate is P g/cm$^3$, satisfying $1.40 \leq$ P $\leq 1.70$. This helps increase the porosity of the negative electrode plate, facilitating electrolyte infiltration and deintercalation of active ions from the negative electrode plate, thereby improving the kinetic performance of the secondary battery. This can also reduce the film stripping risk of the negative electrode plate, increase contact area between particles of the negative electrode material, and reduce the electron impedance, facilitating the performance of the secondary battery and increasing the energy density of the secondary battery.

In an embodiment of this application, a capacity per unit area of a single side surface of the negative electrode plate is M mAh/$cm^2$, satisfying $1.8 \leq M \leq 4.0$. This helps shorten a deintercalating path of active ions, increase an interface adhesion force of the negative electrode plate, and reduce the impedance at the late stage of cycling and the film stripping risk of the negative electrode plate. This also helps obtain a secondary battery with a high energy density at low costs.

In an embodiment of this application, a porosity of the negative electrode plate is $\sigma$, satisfying $(CD-P) \times 100\% \leq \sigma \leq 40\%$. This helps facilitate the electrical performance of the secondary battery, reduces electrolyte consumption and contact impedance between particles of the negative electrode material, and can increase the energy density of the secondary battery.

A third aspect of this application provides a secondary battery including the negative electrode plate according to any one of the foregoing embodiments. The secondary battery has good cycling performance.

A fourth aspect of this application provides an electric apparatus including the secondary battery according to the third aspect.

Beneficial effects of this application are as follows.

This application provides a negative electrode material, a negative electrode plate, a secondary battery, and an electric apparatus. A button battery using such negative electrode material has a charge gram capacity of Cap.C mAh/g and a discharge gram capacity of Cap.D mAh/g, satisfying $13 \leq Cap.C-Cap.D \leq 18$, where $335.0 \leq Cap.C \leq 355.0$ and $320.0 \leq Cap.D \leq 340.0$. A secondary battery using such negative electrode material has excellent cycling performance. Certainly, any product or method for implementing this application is not required to have all the advantages mentioned above.

## DESCRIPTION OF EMBODIMENTS

The following clearly and completely describes the technical solutions in this application. Apparently, the described embodiments are only some rather than all of the embodiments of this application. All other embodiments obtained by persons of ordinary skill in the art based on the embodiments of this application shall fall within the protection scope of this application.

It should be noted that in the descriptions of this application, a lithium-ion battery is used as an example of the secondary battery for explanation of this application. However, the secondary battery of this application is not limited to the lithium-ion battery. Specific technical solutions are as follows.

A first aspect of this application provides a negative electrode material. A button battery using the negative electrode material has a charge gram capacity of Cap.C mAh/g and a discharge gram capacity of Cap.D mAh/g, where $13 \leq Cap.C-Cap.D \leq 18$, $335.0 \leq Cap.C \leq 355.0$, and $320.0 \leq Cap.D \leq 340.0$, preferably, $15 \leq Cap.C-Cap.D \leq 18$. The inventors have found that: when Cap.D is low, graphite particles in the negative electrode material have a low crystallinity, and carbon atoms in the particles are partially $sp^3$ hybridized and partially $sp^2$ hybridized. Graphite has a two-dimensional lamella structure, and lamellas tend to be stripped during intercalation and deintercalation of lithium ions. The $sp^3$ hybridization helps improve the structural stability of the negative electrode material, thereby helping maintain the structural stability of the negative electrode plate during cycling of the secondary battery. Through research, the inventors have also found that a difference between Cap.C and Cap.D should not be excessively large. Otherwise, more amorphous portions and defects are likely to be present in the negative electrode material. The lithiation capacity of the amorphous portions is irreversible during cycling, thereby affecting the cycling performance of the secondary battery. Based on the foregoing findings, in this application, Cap.C and Cap.D of the negative electrode material and their relationship are jointly controlled within the foregoing ranges, allowing the secondary battery using this negative electrode material to have excellent cycling performance.

In some embodiments of this application, a compacted density of the negative electrode material is CD g/$cm^3$ after being pressed under a pressure of $5 \times 10^3$ kg, satisfying $1.60 \leq CD \leq Cap.D/187.88$. In this application, $187.88 = 372 \div 1.98$, where 372 is a theoretical maximum gram capacity of the negative electrode material and 1.98 is a theoretical maximum compacted density of the negative electrode material. Without any wish to be bound by any theory, in this application, the compacted density of the negative electrode material is controlled within the foregoing range. This helps obtain a negative electrode plate with a high compacted density and a secondary battery with a high energy density. This also allows graphite particles in the negative electrode material to have an appropriate degree of $sp^3$ hybridization, helping obtain a secondary battery with excellent cycling performance.

In some embodiments of this application, a specific surface area of the negative electrode material is BET $m^2$/g, where the specific surface area and a particle size distribution of $D_n10$ of the negative electrode material satisfy $0.5 \leq 0.5 \times BET-D_n10 \leq 2$, preferably, $0.8 \leq 0.5 \times BET-D_n10 \leq 1.7$. The inventors have found that a correlation exists between

BET and $D_n10$. $D_n10$ represents a level of distribution of small particles. If $D_n10$ is excessively small, BET will be excessively large, and excessive small particles will hinder the improvement in storage performance of a lithium-ion battery. BET represents active area of particles, which is usually affected by surface oxidation. As BET increases, the degree of oxidation also increases, further compromising the initial Coulombic efficiency of the lithium-ion battery. In this application, with the BET and $D_n10$ of the negative electrode material controlled within the foregoing range, the cycling performance of the lithium-ion battery can be improved. In this application, $D_n10$ refers to a value of a particle size in a number-based particle size distribution that reaches 10% of a cumulative number from a small particle size side.

In some embodiments of this application, $0.8 \ \mu m \leq D_n10 \leq 1.4 \ \mu m$.

In some embodiments of this application, a specific surface area BET $m^2/g$ of the negative electrode material is $3.0 \ m^2/g$ to $6.0 \ m^2/g$.

In an embodiment of this application, $30 \ \mu m \leq D_v99 \leq 45 \ \mu m$.

In some embodiments of this application, the particle size distribution by volume of the negative electrode material satisfies $D_v99 \leq 3.0 \times D_v50 \leq 50.0 \ \mu m$ and $D_v90/D_v50 \leq 2.5$, preferably, $1.7 \leq D_v90/D_v50 \leq 2.1$. Through research, the inventors have found that: $D_v50$ represents the particle size of the negative electrode material, and controlling $D_v50$ within the foregoing range helps improve the cycling performance of the lithium-ion battery and reduce the occurrence of side reactions. When $D_v50$ and $D_v99$ are controlled to satisfy the relationship specified in this application, the processability of the lithium-ion battery can be improved, and the possibility of unsatisfying appearance of the negative electrode plate, such as bumps and lithium precipitation, can be reduced. In addition, when $D_v50$ and $D_v99$ are controlled to satisfy the relationship specified in this application, the particle size distribution of the negative electrode material is also more concentrated. To sum up, in this application, $D_v50$, $D_v90$, and $D_v99$ of the negative electrode material are controlled to satisfy the foregoing relationships. In this case, particle distribution of the negative electrode material is adequate, helping improve the kinetic performance, processability, and yield rate of lithium-ion batteries.

In this application, $D_v50$ refers to a particle size in a volume-based particle size distribution that reaches 50% of a cumulative volume from a small particle size side. $D_v90$ refers to a particle size in the volume-based particle size distribution that reaches 90% of a cumulative volume from a small particle size side. $D_v99$ refers to a particle size in the volume-based particle size distribution that reaches 99% of a cumulative volume from a small particle size side.

In some embodiments of this application, a degree of graphitization of the negative electrode material is G, satisfying $84.0\% \leq G \leq 97.0\%$. With the degree of graphitization of the negative electrode material controlled within the foregoing range, the interlayer spacing of particles of the negative electrode material is increased, facilitating rapid deintercalation of lithium ions from the particles of the negative electrode material and thereby improving the kinetic and cycling performance of the lithium-ion battery.

In some embodiments of this application, the negative electrode material includes a graphite material, where the graphite material includes artificial graphite and/or natural graphite.

In some embodiments of this application, the negative electrode material may further include a silicon-carbon material and/or a silicon-oxygen material. This can further increase the gram capacity of the negative electrode material and improve the energy density of the secondary battery.

In some embodiments of this application, a tap density of the negative electrode material is TD $g/cm^3$, where $0.8 \leq TD \leq 1.2$, and an OI value of the negative electrode material is 3 to 8. With the tap density of the negative electrode material controlled within the foregoing range, the stability of negative electrode slurry can be improved, facilitating application of the negative electrode slurry, simplifying the processing, improving appearance of the negative electrode plate, and improving the electrical performance of the lithium-ion battery. With the OI value of the negative electrode material controlled within the foregoing range, deintercalation of lithium ions from the negative electrode material is facilitated, thereby improving the kinetic performance of the lithium-ion battery. In this application, with the tap density and OI value of the negative electrode material controlled within the foregoing ranges, the cycling performance of the lithium-ion battery can be improved.

A second aspect of this application provides a negative electrode plate including the negative electrode material according to any one of the foregoing embodiments.

In some embodiments of this application, a compacted density of the negative electrode plate is P $g/cm^3$, satisfying $1.40 \leq P \leq 1.70$. With the compacted density of the negative electrode plate controlled within the foregoing range, the porosity of the negative electrode plate can be increased, facilitating electrolyte infiltration and deintercalation of lithium ions from the negative electrode plate. As a result, the kinetic performance of the lithium-ion battery is improved, and the film stripping risk of the negative electrode plate can be reduced. In addition, contact area between particles of the negative electrode material is increased, and the electron impedance is reduced, facilitating the performance of the lithium-ion battery, and increasing the energy density of the lithium-ion battery.

In some embodiments of this application, a capacity per unit area of a single side surface of the negative electrode plate is M $mAh/cm^2$, satisfying $1.8 \leq M \leq 4.0$. Through research, the inventors have found that the capacity per unit area of the negative electrode plate represents an amount of active material per unit area of the negative electrode plate. With the capacity per unit area of a single side surface of the negative electrode plate controlled within the foregoing range, a deintercalating path of lithium ions can be shortened and an interface adhesion force between the negative electrode plate and the separator can be increased, thereby reducing the impedance and film stripping risk of the negative electrode plate at the late stage of cycling. This also helps obtain a lithium-ion battery with a high energy density at low costs.

In some embodiments of this application, a porosity of the negative electrode plate is σ, satisfying (CD-P) × 100% ≤ σ ≤ 40%. The compacted density and porosity of the negative electrode plate influence each other. In this application, with the compacted density and porosity of the negative electrode plate controlled within the foregoing ranges, the electrical performance of the lithium-ion battery is facilitated and electrolyte consumption and contact impedance between particles of the negative electrode material is reduced, increasing the energy density of the lithium-ion battery.

The preparation method of the negative electrode material is not particularly limited in this application. For example, the negative electrode material may be prepared using the following method.

Petroleum coke is selected as the raw material of artificial graphite, where the petroleum coke has a volatile matter content of less than 15% and a sulfur content of less than 2%. Petroleum coke is pulverized till $D_v50$ becomes 9 μm to 10 μm, and is then subjected to pre-carbonization at a temperature of 800°C to 1200°C. After the pre-carbonization, pitch is added for granulation, where an amount of pitch added is 3wt% to 8wt% of petroleum coke, granulation duration is controlled to be 2 h to 4 h, and granulation temperature is controlled to be 200°C to 500°C. Parameters such as size of granulation and compacted density of powder are controlled based on the granulation duration and temperature, and then a product resulting from granulation is graphitized. After graphitization, shaping and grading are performed to grade the particle size distribution of the negative electrode material, so as to obtain the negative electrode material.

The method for controlling thecharge gram capacity and discharge gram capacity of the negative electrode material is not particularly limited in this application, provided that the objectives of this application can be achieved. For example, the gram capacity of the negative electrode material may be controlled by time period-based graphitization. In the first period of graphitization, the temperature is 1500°C to 2000°C, where a heating speed is 1°C/min to 3°C/min in the heating stage, and the temperature preservation duration is 5 hours to 10 hours. In the second period of graphitization, the temperature is 2000°C to 3000°C, where the heating speed is 2°C/min to 5°C/min in the heating stage, and the temperature preservation duration is 25 hours to 60 hours. Through research, the inventors have found that the charge gram capacity of the negative electrode material increases with the rise of the graphitization temperature, and the discharge gram capacity of the negative electrode material decreases as the temperature preservation duration of graphitization becomes shorter. In this application, the charge gram capacity and the discharge gram capacity of the negative electrode material are controlled by adjusting the graphitization temperature and temperature preservation duration.

The method for controlling the particle size distribution of the negative electrode material is not particularly limited in this application, provided that the objectives of this application can be achieved. For example, it is known to those skilled in the art that the desired particle size distribution can be obtained by setting parameters of a shaping machine, such as frequency, rotating speed, and feed speed. When the frequency and rotating speed are higher, particles on the mill of the shaping machine are subject to greater centrifugal force. In this case, larger particles are more likely to slip to the outer ring and separated from particles of smaller size to a greater extent, and vice versa. A higher feed speed means a lower degree of separation between large and small particles, and vice versa. The particle size distribution of the negative electrode material can be controlled by adjusting the foregoing parameters.

The method for controlling the OI value of the negative electrode material is not particularly limited in this application, provided that the objectives of this application can be achieved. For example, the OI value of a material is relevant to the particle size. A larger particle size leads to a greater OI value. Therefore, the OI value of a material can be adjusted by changing the particle size. In addition, other factors such as the raw material and degree of granulation will also affect the OI value of a material, which is not described herein.

The method for controlling the capacity per unit area of a single side surface of the negative electrode plate is not particularly limited in this application, provided that the objectives of this application can be achieved. For example, the capacity per unit area of a single side surface of the negative electrode plate is usually increased as the thickness of a negative electrode material layer is increased, and can be controlled by adjusting the thickness of the negative electrode material layer.

The method for adjusting the tap density of the negative electrode material is not particularly limited in this application, provided that the objectives of this application can be achieved. For example, the tap density of the negative electrode material is usually increased as the particle size of the material is increased. Based on this, the tap density of the negative electrode material can be controlled by adjusting the particle size of the negative electrode material.

The method for adjusting the porosity of the negative electrode material is not particularly limited in this application, provided that the objectives of this application can be achieved. For example, the porosity of the negative electrode plate usually decreases as the compacted density of the negative electrode plate is increased. Based on this, the porosity of the negative electrode plate can be controlled by adjusting the compacted density of the negative electrode plate.

The granulation method used during preparation of the negative electrode material is not particularly limited in this application, provided that the objectives of this application can be achieved. For example, a horizontal retort may be used for granulation.

In this application, the negative electrode material layer may further include a negative electrode binder. The negative electrode binder is not particularly limited in this application, provided that the objectives of this application can be achieved. For example, the binder may include but is not limited to at least one of acrylate, polyamide, polyimide, polyamideimide, polyvinylidene fluoride, styrene-butadiene rubber, sodium alginate, polyvinyl alcohol, polytetrafluoroethylene, polyacrylonitrile, sodium carboxymethyl cellulose, or potassium carboxymethyl cellulose.

In this application, the negative electrode plate includes a negative electrode current collector, and the negative electrode material layer may be provided on one surface or two surfaces along a thickness direction of the negative electrode current collector. It should be noted that the "surface" herein may be an entire or partial area of the negative electrode current collector. This is not particularly limited in this application provided that the objectives of this application can be achieved. The negative electrode current collector is not particularly limited in this application provided that the objectives of this application can be achieved. For example, the negative electrode current collector may include but is not limited to copper foil, copper alloy foil, nickel foil, stainless steel foil, titanium foil, foamed nickel, foamed copper, a composite current collector, or the like. In this application, thickness of the negative electrode current collector is not particularly limited, provided that the objectives of this application can be achieved. For example, the thickness of the negative electrode current collector is 4 $\mu$m to 12 $\mu$m. The negative electrode material layer in this application may have a thickness of 70 $\mu$m to 120 $\mu$m.

Optionally, the negative electrode plate may further include a conductive layer, and the conductive layer is located between the negative electrode current collector and the negative electrode material layer. Composition of the conductive layer is not particularly limited in this application, and may be a conductive layer commonly used in the art. The conductive layer may include but is not limited to the negative electrode conductive agent and the negative electrode binder mentioned above.

This application further provides a secondary battery, including the negative electrode plate according to any one of embodiments of this application.

The secondary battery of this application is not particularly limited, and may include an apparatus in which electrochemical reactions take place. For example, the secondary battery may include but is not limited to a lithium-ion secondary battery (a lithium-ion battery) or a sodium-ion secondary battery.

The electrochemical apparatus of this application may further include a positive electrode plate. The positive electrode plate is not particularly limited in this application provided that the objectives of this application can be achieved. For example, the positive electrode plate usually includes a positive electrode current collector and a positive electrode material layer. The positive electrode material layer may be provided on one surface along a thickness direction of the positive electrode current collector or on two surfaces along the thickness direction of the positive electrode current collector. It should be noted that the "surface" herein may be an entire region or a partial region of the positive electrode current collector. This is not particularly limited in this application, provided that the objectives of this application can be achieved. In this application, a positive electrode current collector is not particularly limited, provided that the objectives of this application can be achieved. For example, the positive electrode current collector may include but is not limited to aluminum foil, aluminum alloy foil, or a composite current collector. In this application, thickness of the positive electrode current collector is not particularly limited, provided that the objectives of this application can be achieved. For example, the thickness is 8 $\mu$m to 12 $\mu$m.

In this application, the positive electrode material layer includes a positive electrode material. The positive electrode material is not particularly limited in this application, provided that the objectives of this application can be achieved. For example, the positive electrode material may include at least one of lithium or a composite oxide of transition metal elements. The transition metal elements are not particularly limited in this application, provided that the objectives of this application can be achieved. For example, at least one of nickel, manganese, cobalt, or iron may be included. Specifically, the positive electrode material may include at least one of lithium nickel cobalt manganese oxide, lithium nickel cobalt aluminate, lithium iron phosphate, a lithium-rich manganese-based material, lithium cobalt oxide, lithium manganate oxide, lithium iron manganese phosphate, or lithium titanate.

In this application, the positive electrode material layer may further include a positive electrode conductive agent. The positive electrode conductive agent is not particularly limited in this application, provided that the objectives of this application can be achieved. For example, the positive electrode conductive agent may include but is not limited to at least one of conductive carbon black (Super P), carbon nanotubes (CNTs), carbon fibers, acetylene black, flake graphite, Ketjen black, graphene, a metal material, or a conductive polymer. Preferably, the positive electrode conductive agent includes conductive carbon black and carbon nanotubes. The carbon nanotubes may include but are not limited to single-walled carbon nanotubes and/or multi-walled carbon nanotubes. The carbon fibers may include but are not limited to vapor grown carbon fibers (VGCF) and/or carbon nanofibers. The metal material may include but is not limited to metal powder and/or metal fiber, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole. In this application, the positive electrode material layer may further include a positive electrode binder. The positive electrode binder is not particularly limited in this application, provided that the objectives of this application can be achieved. For example, the positive electrode binder may include but is not limited to at least one of fluorine-containing resin, polypropylene resin, a fiber binder, a rubber binder, or a polyimide binder.

Optionally, the positive electrode plate may further include a conductive layer, and the conductive layer is located between the positive electrode current collector and the positive electrode material layer. Composition of the conductive layer is not particularly limited in this application, and may be a conductive layer commonly used in the art. For example, the conductive layer may include but is not limited to the foregoing positive electrode conductive agent or the foregoing positive electrode binder.

The secondary battery of this application further includes a separator. The separator is not particularly limited in this application and can be selected by those skilled in the art based on actual needs, provided that the objectives of this application can be achieved. For example, a material of the separator may include but is not limited to at least one of polyethylene (PE), polypropylene (PP)-based polyolefin (PO), polyester (for example, polyethylene terephthalate (PET)), cellulose, polyimide (PI), polyamide (PA), spandex, or aramid; and a type of the separator may include but is not limited to at least one of a woven film, a non-woven film (non-woven fabric), a microporous film, a composite film, a separator paper, a laminated film, or a spinning film. For example, the separator may include a substrate layer and a surface treatment layer. The substrate layer may be non-woven fabric, a film, or a composite film of a porous structure, and a material of the substrate layer may include at least one of polyethylene, polypropylene, polyethylene glycol terephthalate, polyimide, or the like. Optionally, a polypropylene porous film, a polyethylene porous film, polypropylene non-woven fabric, polyethylene non-woven fabric, or polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by mixing a polymer and an inorganic substance. For example, the inorganic layer includes inorganic particles and a binder. The inorganic particles are not particularly limited, and may be selected from, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be selected from, for example, at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, poly(vinylidene fluoride-hexafluoropropylene), or the like.

The secondary battery of this application further includes an electrolyte. The electrolyte is not particularly limited in this application and can be selected by those skilled in the art based on actual needs, provided that the objectives of this application can be achieved. For example, at least one of ethylene carbonate (also referred to as ethylene carbonate, EC for short), propylene carbonate (PC), diethyl carbonate (DEC), ethyl propionate (EP), propyl propionate (PP), ethyl methyl carbonate (EMC), dimethyl carbonate (DMC), vinylidene carbonate (VC), fluoroethylene carbonate (FEC), or the like is mixed at a mass ratio to obtain a non-aqueous organic solvent, and a lithium salt is dissolved and mixed evenly in the solvent. The "mass ratio" is not particularly limited in this application, provided that the objectives of this application can be achieved. A type of the lithium salt is not particularly limited in this application, provided that the objectives of this application can be achieved. For example, the lithium salt may include $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, lithium bis(oxalato)borate (LiBOB), or lithium difluoroborate. A concentration of the lithium salt in the electrolyte is not particularly limited in this application, provided that the objectives of this application can be achieved. For example, a concentration of the lithium salt is 1.0 mol/L to 2.0 mol/L.

The secondary battery of this application further includes a housing. The housing is not particularly limited in this application and can be selected by those skilled in the art based on actual needs, provided that the objectives of this application can be achieved. For example, the housing may include an aluminum-plastic film.

A secondary battery preparation method is not particularly limited in this application and may be a preparation method known in the art, provided that the objectives of this application can be achieved. For example, the secondary battery preparation method includes but is not limited to the following steps: stacking a positive electrode plate, a separator, and a negative electrode plate in sequence, performing operations such as winding and folding on the resulting stack to obtain an electrode assembly of a winding structure, putting the electrode assembly into a packaging bag, and injecting an electrolyte into the packaging bag and sealing the bag. An electrochemical apparatus is obtained.

A third aspect of this application provides an electric apparatus including the secondary battery according to the foregoing embodiments. The electric apparatus is not particularly limited in this application, and may be a known electric apparatus used in the prior art. For example, the electric apparatus may include but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

## Examples

The following describes the embodiments of this application more specifically by using examples and comparative examples. Various tests and evaluations were performed using the following methods.

Test method and equipment:

**Gram capacity test of negative electrode material:**

Refer to national standard GB/T 24533-2019, Graphite Negative Electrode Materials for Lithium-Ion Batteries. A negative electrode material was prepared into a negative electrode plate after mixing, coating, rolling, punching, and drying, a lithium sheet was used as a positive electrode plate, and then a button battery was assembled for test. The gram capacity of the material was calculated by testing the capacity of the button battery. Alternatively, the negative electrode material may also be obtained from a lithium-ion battery (a cycled lithium-ion battery is also acceptable). The negative electrode plate was removed after a lithium-ion battery was fully discharged, treated in a muffle furnace at 400°C (with nitrogen protection), and cooled to room temperature after the treatment. The negative electrode material was stripped off the copper foil surface and used for assembling a button battery, and the gram capacity of the button battery was tested.

**Specific surface area test:**

Refer to national standard GB/T 19587-2017, Determination of the Specific Surface Area of Solids by Gas Adsorption Using the BET Method. 1 g to 8 g of sample (occupying at least 1/3 volume of the bulb) was put in a 1.27 cm long tube ended with a bulb (with a diameter of 12 mm), pretreated at 200°C for two hours, and then put in a test device TriStar3030 (Micromeritics in the United States) for testing. The gas used for adsorption was nitrogen (with a purity of 99.999%), and the test temperature was 77K. The specific surface area was tested by using a BET calculation method.

*Particle size test of negative electrode material:*

Refer to GB/T 19077-2016 Particle Size Analysis Laser Diffraction Methods. The specific procedure was as follows. 1 g of sample, 20 mL of deionized water, and a small amount of dispersant were mixed evenly and placed in an ultrasonic device for 5 minutes of ultrasonic processing, and then the solution was poured into the feeding system Hydro 2000SM for testing. The test device used was Mastersizer 3000 of Malvern. During the test, when a laser beam passed through the dispersed particle samples, the particle size was measured by measuring the intensity of the scattered light. The data was then used for analyzing and calculating the particle size distribution that forms the spectrogram of the scattered light. The refractive index of the particles under test was 1.8. One sample was tested for three times, and an average value of the three tests was used as the particle size.

**Test on degree of graphitization:**

High-purity silicon powder (with a purity of 99.99%) was used as a standard sample. A graphite sample and the standard sample of silicon were mixed at a mass ratio of 5:1, and the 002 peak of graphite and the 111 peak of silicon were obtained through test. The 002 peak of graphite obtained through test was calibrated, and the degree of graphitization was indirectly calculated based on a calibrated 002 interplanar spacing d002 by using the calculation formula: $G = (0.344-d002)/(0.344-0.3354) \times 100\%$, where 0.344 represents an interlayer spacing of non-graphitizing carbon and 0.3354 represents an interlayer spacing of ideal graphite, both in unit of nm.

**OI value test of negative electrode material:**

A (004) plane diffraction pattern and a (110) plane diffraction pattern in X-ray diffraction patterns of the negative electrode material layer were tested in accordance with the standard JB/T 4220-2011 Determination Method of Artificial Graphite Lattice Parameter for the mechanical industry of People's Republic of China. The test conditions were as follows. CuK$\alpha$ radiation was used for X-ray, and CuK$\alpha$ radiation was removed by a filter or monochromator. The operating voltage of an X-ray tube was (30-35) kV and the operating current was (15-20) mA. The scanning speed of the counter was 1/4 (°)/min. A scanning range of diffraction angle 2$\theta$ was 53° to 57° for recording a 004 diffraction pattern. A scanning range of diffraction angle 2$\theta$ was 75° to 79° for recording a 110 diffraction pattern. A peak area obtained from the (004) plane diffraction pattern was recorded as C004, and a peak area obtained from the (110) plane diffraction pattern was recorded as C110. A ratio C004/C110 of the negative electrode material was calculated, which was the OI value of the negative electrode material.

**Tap density test:**

50 g of negative electrode material powder was put into a measuring cylinder, and the measuring cylinder loaded with the powder was fastened to an instrument for vibration. After the vibration, a height of the surface of the powder was visually checked for a volume, and then the tap density was calculated. The test device used was BT-301 of Dandong Bettersize.

**Compacted density test:**

Referring to national standard GB/T 24533-2009 Graphite Negative Electrode Materials for Lithium-Ion Battery, the test method was as follows.
1.0000±0.0500 g of negative electrode material sample was put in a test mold (model: CARVER#3619 13 mm), and the sample was then put into a test device. The test device was SUNS UTM7305, with a test pressure of $0.3 \times 10^3$ kg, $0.5 \times 10^3$ kg, $0.75 \times 10^3$ kg, $1.0 \times 10^3$ kg, $1.5 \times 10^3$ kg, $2.0 \times 10^3$ kg, $2.5 \times 10^3$ kg, $3.0 \times 10^3$ kg, $4.0 \times 10^3$ kg, or $5.0 \times 10^3$ kg, a pressure rise speed of 10 mm/min, a pressure rise duration of 30s, a pressure relief speed of 30 mm/min, and a pressure relief duration of 10s. In this application, the compacted densities of powder were measured after being pressed under a pressure of $5 \times 10^3$ kg. The formula for calculating the compacted density was as follows: compacted density = mass of the material/stress area of the material $\times$ thickness of the sample, in unit of g/cm$^3$.

**Test of capacity per unit area of single side surface of negative electrode plate:**

A negative electrode plate coated on both sides was fixed, and a negative electrode active material layer on one surface of a negative electrode current collector copper foil was washed off with ethanol and deionized water to expose the copper foil. A single-sided negative electrode plate was obtained. The treated single-sided negative electrode plate was then put into an oven at 80°C and dried for 1 hour. After that, 10 small discs (with a diameter of 14 mm) were cut from the plate for test in button batteries. The 10 small discs made from the single-sided negative electrode plate were used for assembling button batteries to test their charge and discharge capacity (the test method was as described in the gram capacity test of negative electrode material). An average value X mAh of discharge capacity of the negative electrode materials in the 10 button batteries was calculated. Then, the capacity per unit area of a single side surface of the negative electrode plate was obtained by dividing the discharge capacity by an area of a single-sided small disc. The specific calculation formula was as follows: capacity per unit area of a single side surface of the negative electrode plate M = X/(3.14 $\times$ 7 $\times$ 7/100).

**Porosity test of negative electrode plate:**

A negative electrode plate was cut into small dices of 10 mm$\times$10 mm, and mass of the samples was weighed. The samples were then put in a true densitometer (model: Accupyc II1340), the test system was sealed, and a certain amount of nitrogen was introduced. Gas pressures in the sample chamber and the swelling chamber were measured. Then, a true volume V2 was calculated according to the Bohr's theory (PV = nRT). Apparent volume V1 = S $\times$ H (S was the surface area of a sample and H was the thickness of a sample). Porosity K was then calculated using the formula: K = (V1-V2)/V1 $\times$ 100%.

**Cycling performance test:**

With a test temperature of 25°C, the cycling performance of a lithium-ion battery was tested as follows.

    1. The lithium-ion battery was discharged to 2.5 V at a constant current of 0.5(C) (not the first discharge).
    2. The lithium-ion battery was left standing for 10 minutes.

3. The lithium-ion battery was charged to 3.6 V at a constant current of 0.5C, and then charged to 0.05C at a constant voltage.

4. The lithium-ion battery was left standing for 10 minutes.

5. The lithium-ion battery was discharged to 2.5 V at a constant current of 0.5(C) (first discharge).

Steps 2 to 5 were repeated for 2000 times. The capacity retention rate after 2000 cycles (cycles) was calculated using the formula: electric energy discharged in the 2000th cycle/electric energy discharged in the first cycle × 100%.

**Example 1-1**

**<Preparation of negative electrode plate>**

Petroleum coke was selected as a raw material for artificial graphite, where the petroleum coke had a volatile matter content of 13.0% and a sulfur content of 1.5%. Petroleum coke was pulverized till $D_v50$ being 9 $\mu$m and treated with pre-carbonization at a temperature of 1100°C. After the pre-carbonization, pitch was added for granulation, where an amount of pitch added was 5wt% of petroleum coke, a duration of granulation was controlled at 3 hours, and a temperature of granulation was controlled at 400°C. After the granulation, the gram capacity of the negative electrode graphite was controlled by time segment-based graphitization. In the first time segment, the graphitization temperature was 1600°C, where a heating speed was 2°C/min in the heating stage, and the temperature preservation duration was 7 hours. In the second segment of graphitization, the temperature was 2600°C, where the heating speed was 3°C/min in the heating stage, and the temperature preservation duration was 45 hours. After the graphitization, shaping and grading were performed by a shaping machine to adjust the particle size distribution. Then, the negative electrode material was obtained.

The prepared negative electrode material, conductive carbon black, a binder styrene-butadiene rubber (SBR), and a thickener sodium carboxymethyl cellulose (CMC) were mixed at a mass ratio of 95:1.5:2:1.5, deionized water was added to prepare a slurry with a solid content of 75wt%, and the slurry was stirred evenly. The slurry was uniformly applied on one surface of a negative electrode current collector copper foil with a thickness of 6 $\mu$m, and dried at 85°C. A negative electrode plate with a 50 $\mu$m-thick negative electrode active material layer was obtained. Then, the foregoing steps were repeated on the other surface of the negative electrode plate to obtain a negative electrode plate coated with a negative electrode active material layer on both surfaces. The prepared negative electrode plate was cold pressed, slit, cut, and welded with a tab to obtain a negative electrode plate.

**<Preparation of positive electrode plate>**

A positive electrode material lithium iron phosphate, a conductive agent acetylene black, and polyvinylidene fluoride (PVDF) were mixed at a mass ratio of 96.3:2.2:1.5, and then N-methylpyrrolidone (NMP) was added as a solvent to prepare a slurry with a solid content of 70wt%. The slurry was evenly stirred. The slurry was uniformly applied on a positive electrode current collector aluminum foil with a thickness of 10 $\mu$m and dried at 90°C to obtain a positive electrode plate with a 60 $\mu$m-thick coating layer. Then, the foregoing steps were repeated on the other surface of the positive electrode plate to obtain a positive electrode plate coated with a positive electrode material on both surfaces. A positive electrode plate was obtained after cold pressing and cutting.

**<Preparation of electrolyte>**

In a dry argon atmosphere glove box, ethylene carbonate (EC), propylene carbonate (PC), ethyl methyl carbonate (EMC), and diethyl carbonate (DEC) were mixed at a mass ratio of EC:PC:EMC:DEC=1:3:3:3, fluoroethylene carbonate and 1,3-propane sultone were added, dissolved, and well stirred, and then a lithium salt $LiPF_6$ was added and well mixed to obtain an electrolyte. A mass percentage of $LiPF_6$ was 12.5%, a mass percentage of fluoroethylene carbonate was 2%, and a mass percentage of 1,3-propane sultone was 2%. The mass percentage of each substance was calculated based on mass of the electrolyte.

**<Preparation of separator>**

A 15 $\mu$m-thick polyethylene (PE) film (provided by Celgard) was used.

<Preparation of lithium-ion battery>

The positive electrode plate, the separator, and the negative electrode plate prepared above were stacked in sequence, so that the separator was located between the positive electrode and the negative electrode for isolation, and then wound to obtain an electrode assembly. The electrode assembly was placed in an aluminum-plastic film packaging bag, dried and injected with the electrolyte, and a lithium-ion battery was obtained after vacuum packaging, standing, formation, degassing, trimming and other processes.

**Example 1-2** to **Example 1-11**

**<Preparation of negative electrode plate>** was the same as in Example 1-1, except that preparation parameters such as the temperature of heating, heating speed, and heating duration during graphitization in the first period and the second period were adjusted as shown in Table 1.

**Table 1**

| No. | First-period graphitization | | | Second-period graphitization | | |
|---|---|---|---|---|---|---|
| | Temperature of heating (°C) | Heating speed (°C/min) | Heating duration (h) | Temperature of heating (°C) | Heating speed (°C/min) | Heating duration (h) |
| Example 1-1 | 1600 | 2.0 | 7.0 | 2600 | 3.0 | 45.0 |
| Example 1-2 | 1500 | 2.0 | 10.0 | 3000 | 4.0 | 31.0 |
| Example 1-3 | 1600 | 1.0 | 9.5 | 2900 | 5.0 | 33.0 |
| Example 1-4 | 1700 | 1.5 | 9.0 | 2800 | 4.0 | 35.0 |
| Example 1-5 | 1700 | 2.0 | 8.0 | 2800 | 3.0 | 33.0 |
| Example 1-6 | 1800 | 2.0 | 8.0 | 2700 | 2.0 | 30.0 |
| Example 1-7 | 1900 | 2.0 | 7.5 | 2600 | 3.0 | 31.0 |
| Example 1-8 | 1900 | 2.5 | 6.5 | 2400 | 2.5 | 27.0 |
| Example 1-9 | 2000 | 2.5 | 6.0 | 2400 | 2.0 | 30.0 |
| Example 1-10 | 2000 | 3.0 | 5.0 | 2300 | 2.0 | 35.0 |
| Example 1-11 | 1900 | 3.0 | 6.5 | 2300 | 3.5 | 31.0 |
| Comparative Example 1 | 1400 | 2.0 | 10.0 | 2500 | 2.0 | 35.0 |
| Comparative Example 2 | 1600 | 3.0 | 4.0 | 2300 | 2.0 | 30.0 |
| Comparative Example 3 | 1800 | 2.0 | 8.0 | 2200 | 3.0 | 30.0 |
| Comparative Example 4 | 1900 | 2.0 | 9.0 | 2400 | 6.0 | 28.0 |
| Comparative Example 5 | 1900 | 4.0 | 7.0 | 2500 | 3.0 | 32.0 |
| Comparative Example 6 | 2000 | 1.0 | 6.0 | 3100 | 3.0 | 35.0 |
| Comparative Example 7 | 2100 | 2.0 | 5.0 | 3000 | 4.0 | 28.0 |

**Example 2-1 to Example 2-5**

**<Preparation of negative electrode plate>** was the same as in Example 1-1, except that the amount of pitch added and the duration of granulation were adjusted as shown in Table 2 for adjusting the compacted density of the negative electrode plate.

**Table 2**

| No. | Amount of pitch added (%) | Duration of granulation (h) |
|---|---|---|
| Example 1-1 | 5.0 | 3.0 |
| Example 2-1 | 4.0 | 2.5 |
| Example 2-2 | 5.0 | 3.0 |
| Example 2-3 | 6.0 | 3.0 |
| Example 2-4 | 7.0 | 3.5 |
| Example 2-5 | 8.0 | 4.0 |

**Example 3-1 to Example 3-8**

**<Preparation of negative electrode plate>** was the same as in Example 2-4, except that the volatile matter content of petroleum coke and the size of pulverized petroleum coke were selected as shown in Table 3 for adjusting $D_n10$ and BET of the negative electrode material.

**Table 3**

| No. | Volatile matter content of petroleum coke (%) | Size of pulverized petroleum coke ($\mu$m) |
|---|---|---|
| Example 2-4 | 13.0 | 9.0 |
| Example 3-1 | 8.0 | 9.3 |
| Example 3-2 | 10.0 | 9.5 |
| Example 3-3 | 12.0 | 9.7 |
| Example 3-4 | 14.0 | 9.8 |
| Example 3-5 | 15.0 | 10.0 |
| Example 3-6 | 9.0 | 9.4 |
| Example 3-7 | 11.5 | 9.2 |
| Example 3-8 | 8.0 | 8.9 |

**Example 4-1 to Example 4-14**

**<Preparation of negative electrode plate>** was the same as in Example 3-3, except that parameters such as $D_v99$, $D_v50$, and $D_v90$ of the negative electrode material were adjusted as shown in Table 7 by adjusting the size of pulverization and graphitization temperature and controlling the particle size distribution by using a shaping machine during shaping and grading subsequent to graphitization.

**Example 5-1 to Example 5-9**

**<Preparation of negative electrode plate>** was the same as in Example 4-2, except that the tap density and OI value of the negative electrode material were adjusted as shown in Table 8 by adjusting the particle size and particle distribution of the negative electrode material.

**Example 6-1 to Example 6-15**

**<Preparation of negative electrode plate>** was the same as in Example 5-5, except that the compacted density of the negative electrode plate, the capacity M per unit area of a single side surface of the negative electrode plate, and the porosity of the negative electrode plate were adjusted as shown in Table 9.

**Comparative Example 1 to Comparative Example 7**

<Preparation of negative electrode plate> was the same as in Example 1-1, except that preparation parameters such as the temperature, heating speed, and heating duration during graphitization in the first period and the second period were adjusted as shown in Table 1.

Table 4 to Table 9 show the characteristic parameters and performance parameters of all examples and comparative examples.

**Table 4**

| No. | Cap.C (mAh/g) | Cap.D (mAh/g) | Cap.C-Cap.D (mAh/g) | Capacity retention rate after 2000 cycles (%) |
|---|---|---|---|---|
| Example 1-1 | 345.0 | 328.0 | 17.0 | 93.1 |
| Example 1-2 | 355.0 | 339.0 | 16.0 | 93.3 |
| Example 1-3 | 353.5 | 337.8 | 15.7 | 93.5 |
| Example 1-4 | 350.0 | 335.2 | 14.8 | 93.0 |
| Example 1-5 | 354.5 | 340.0 | 14.5 | 92.9 |
| Example 1-6 | 350.0 | 336.6 | 13.4 | 93.3 |
| Example 1-7 | 346.3 | 331.0 | 15.3 | 93.8 |
| Example 1-8 | 343.6 | 325.6 | 18.0 | 93.8 |
| Example 1-9 | 340.5 | 327.0 | 13.5 | 93.6 |
| Example 1-10 | 335.0 | 320.0 | 15.0 | 93.9 |
| Example 1-11 | 336.0 | 323.0 | 13.0 | 92.8 |
| Comparative Example 1 | 333.8 | 321.0 | 12.8 | 89.1 |
| Comparative Example 2 | 335.0 | 317.5 | 17.5 | 89.3 |
| Comparative Example 3 | 355.0 | 341.0 | 14.0 | 88.7 |
| Comparative Example 4 | 334.0 | 318.9 | 15.1 | 88.5 |
| Comparative Example 5 | 338.0 | 315.0 | 23.0 | 88.2 |
| Comparative Example 6 | 356.0 | 339.0 | 17.0 | 88.9 |
| Comparative Example 7 | 342.5 | 323.5 | 19.0 | 89.0 |

From Example 1-1 to Example 1-11 and Comparative Example 1 to Comparative Example 7, it can be learned that: when Cap.C is excessively low or high (for example, in Comparative Example 1 and Comparative Example 6), the capacity retention rate of the lithium-ion battery is low; when Cap.D is excessively low or high (for example, in Comparative Example 2 to Comparative Example 5), the capacity retention rate of the lithium-ion battery is also low; and when Cap.C-Cap.D is excessively small or great (for example, in Comparative Example 1 and Comparative Example 7), the capacity retention rate of the lithium-ion battery is still low.

The negative electrode material according to an embodiment of this application satisfies: $13 \leq$ Cap.C-Cap.D $\leq$ 18, $335.0 \leq$ Cap.C $\leq 355.0$, and $320.0 \leq$ Cap.D $\leq 340.0$. In this case, the capacity retention rate of the lithium-ion battery is significantly increased. This indicates that a secondary battery with excellent cycling performance can be obtained by adjusting the foregoing parameters to be within the ranges defined in this application.

**Table 5**

| No. | CD (g/cm$^2$) | Cap.D (mAh/g) | Cap.D/187.88 | Capacity retention rate after 2000 cycles (%) |
|---|---|---|---|---|
| Example 1-1 | 1.76 | 328.0 | 1.75 | 93.1 |
| Example 2-1 | 1.76 | 336.0 | 1.79 | 94.5 |
| Example 2-2 | 1.73 | 331.5 | 1.76 | 94.6 |
| Example 2-3 | 1.68 | 327.0 | 1.74 | 94.8 |
| Example 2-4 | 1.63 | 324.0 | 1.72 | 94.7 |
| Example 2-5 | 1.60 | 321.1 | 1.71 | 94.3 |

From Example 2-1 to Example 2-5 and Example 1-1, it can be learned that: when the compacted density of the negative electrode material after being pressed under a pressure of $5 \times 10^3$ kg satisfies $1.60 \leq CD \leq Cap.D/187.88$, the cycling performance of the lithium-ion battery can be further improved, helping obtain a secondary battery with excellent cycling performance.

**Table 6**

| No. | $D_n10$ ($\mu$m) | BET (m$^2$/g) | $0.5 \times BET-D_n10$ | Capacity retention rate after 2000 cycles (%) |
|---|---|---|---|---|
| Example 2-4 | 0.8 | 5.85 | 2.1 | 94.7 |
| Example 3-1 | 0.9 | 5.24 | 1.7 | 95.3 |
| Example 3-2 | 1.1 | 4.82 | 1.3 | 95.5 |
| Example 3-3 | 1.2 | 4.40 | 1.0 | 95.6 |
| Example 3-4 | 1.3 | 4.13 | 0.8 | 95.2 |
| Example 3-5 | 1.4 | 3.80 | 0.5 | 95.3 |
| Example 3-6 | 1.0 | 6.00 | 2.0 | 95.0 |
| Example 3-7 | 1.2 | 5.50 | 1.6 | 95.4 |
| Example 3-8 | 0.9 | 3.00 | 0.6 | 94.9 |

Typically, $D_n10$ and BET of the negative electrode material also affect the performance of a lithium-ion battery. From Example 3-1 to Example 3-8 and Example 2-4, it can be learned that when $D_n10$ and BET of the negative electrode material are jointly controlled to satisfy $0.5 \leq 0.5 \times BET-D_n10 \leq 2.0$, the cycling performance of the lithium-ion battery can be further improved, helping obtain a secondary battery with excellent cycling performance.

**Table 7**

| No. | $D_v99$ ($\mu$m) | $D_v50$ ($\mu$m) | $D_v90$ ($\mu$m) | $3.0D_v50$ | $D_v90/D_v50$ | G | Capacity retention rate after 2000 cycles (%) |
|---|---|---|---|---|---|---|---|
| Example 3-3 | 41.5 | 13.5 | 34.8 | 40.5 | 2.6 | 94.5% | 95.6 |
| Example 4-1 | 40.0 | 14.5 | 31.0 | 43.5 | 2.1 | 92.0% | 96.1 |
| Example 4-2 | 42.0 | 15.5 | 29.5 | 46.5 | 1.9 | 92.2% | 96.3 |
| Example 4-3 | 45.0 | 14.0 | 32.0 | 42.0 | 2.3 | 90.9% | 95.7 |
| Example 4-4 | 38.6 | 16.6 | 31.0 | 50.0 | 1.9 | 91.4% | 95.8 |
| Example 4-5 | 35.7 | 13.0 | 26.0 | 39.0 | 2.0 | 92.5% | 96.1 |

(continued)

| No. | $D_v99$ ($\mu$m) | $D_v50$ ($\mu$m) | $D_v90$ ($\mu$m) | $3.0D_v50$ | $D_v90/D_v50$ | G | Capacity retention rate after 2000 cycles (%) |
|---|---|---|---|---|---|---|---|
| Example 4-6 | 33.5 | 13.5 | 27.0 | 40.5 | 2.0 | 92.7% | 96.0 |
| Example 4-7 | 30.0 | 12.8 | 26.9 | 38.4 | 2.1 | 93.1% | 95.9 |
| Example 4-8 | 38.7 | 13.0 | 34.3 | 39.0 | 2.6 | 92.1% | 95.9 |
| Example 4-9 | 40.3 | 14.5 | 30.0 | 43.5 | 2.1 | 92.2% | 96.2 |
| Example 4-10 | 42.0 | 15.0 | 31.5 | 45.0 | 2.1 | 91.9% | 96.3 |
| Example 4-11 | 41.7 | 14.5 | 31.0 | 43.5 | 2.1 | 84.0% | 95.7 |
| Example 4-12 | 36.8 | 11.5 | 28.7 | 34.5 | 2.5 | 95.7% | 96.2 |
| Example 4-13 | 37.6 | 14.2 | 29.9 | 39.6 | 2.1 | 97.0% | 95.9 |
| Example 4-14 | 34.2 | 16.1 | 27.3 | 48.3 | 1.7 | 92.9% | 95.8 |

Typically, the $D_v99$, $D_v50$, $D_v90$, and degree of graphitization of the negative electrode material also affect the performance of a lithium-ion battery. From Example 4-1 to Example 4-14 and Example 3-3, it can be learned that when $D_v99 \le 3.0 \times D_v50 \le 50.0$ $\mu$m and $D_v90/D_v50 \le 2.5$, the cycling performance of the lithium-ion battery can be further improved, helping obtain a secondary battery with excellent cycling performance.

**Table 8**

| No. | TD ($g/cm^3$) | OI value | Capacity retention rate after 2000 cycles (%) |
|---|---|---|---|
| Example 4-2 | 0.7 | 12 | 96.3 |
| Example 5-1 | 0.9 | 10 | 96.7 |
| Example 5-2 | 1.1 | 13 | 96.6 |
| Example 5-3 | 0.7 | 7 | 96.8 |
| Example 5-4 | 0.6 | 8 | 96.6 |
| Example 5-5 | 1.0 | 6 | 97.2 |
| Example 5-6 | 1.2 | 7 | 97.3 |
| Example 5-7 | 1.1 | 3 | 97.3 |
| Example 5-8 | 1.2 | 5 | 97.2 |
| Example 5-9 | 0.8 | 8 | 97.1 |

Typically, the tap density and OI value of the negative electrode material also affect the performance of a lithium-ion battery. From Example 5-1 to Example 5-9 and Example 4-2, it can be learned that when the tap density and OI value of the negative electrode material are controlled between 0.8 $g/cm^3$ and 1.2 $g/cm^3$ and between 3 and 8 respectively, the cycling performance of the lithium-ion battery can be further improved, helping obtain a secondary battery with excellent cycling performance.

**Table 9**

| No. | P (g/cm$^3$) | M (mAh/cm$^2$) | σ | CD (g/cm$^3$) | (CD-P) ×100% | Capacity retention rate after 2000 cycles (%) |
|---|---|---|---|---|---|---|
| Example 5-5 | 1.38 | 4.5 | 41% | 1.80 | 42.0% | 97.2 |
| Example 6-1 | 1.55 | 4.1 | 43% | 1.80 | 25.0% | 97.4 |
| Example 6-2 | 1.65 | 4.3 | 45% | 1.79 | 14.0% | 97.5 |
| Example 6-3 | 1.36 | 2.5 | 41% | 1.78 | 42.0% | 97.4 |
| Example 6-4 | 1.70 | 3.3 | 42% | 1.79 | 8.0% | 97.5 |
| Example 6-5 | 1.35 | 1.7 | 35% | 1.68 | 33.0% | 97.6 |
| Example 6-6 | 1.40 | 4.0 | 26% | 1.75 | 36.0% | 97.4 |
| Example 6-7 | 1.43 | 3.2 | 40% | 1.72 | 29.0% | 97.5 |
| Example 6-8 | 1.56 | 2.8 | 43% | 1.70 | 14.0% | 97.7 |
| Example 6-9 | 1.70 | 3.5 | 45% | 1.79 | 10.0% | 97.8 |
| Example 6-10 | 1.36 | 3.6 | 32% | 1.65 | 29.0% | 97.9 |
| Example 6-11 | 1.65 | 1.8 | 30% | 1.80 | 15.0% | 97.8 |
| Example 6-12 | 1.60 | 1.9 | 26% | 1.77 | 17.0% | 98.2 |
| Example 6-13 | 1.55 | 3.8 | 28% | 1.73 | 18.0% | 98.1 |
| Example 6-14 | 1.45 | 3.0 | 30% | 1.67 | 22.0% | 98.4 |
| Example 6-15 | 1.69 | 2.5 | 33% | 1.78 | 9.0% | 98.3 |

From Example 6-1, Example 6-2, and Example 5-5, it can be learned that when (CD-P) × 100% ≤ σ, the cycling performance of the lithium-ion battery is further improved.

From Example 6-3, Example 6-4, and Example 5-5, it can be learned that when 1.8 ≤ M ≤ 4.0, the cycling performance of the lithium-ion battery is also further improved.

From Example 6-5, Example 6-7, and Example 5-5, it can be learned that when (CD-P) × 100% ≤ σ ≤ 40%, the cycling performance of the lithium-ion battery is also further improved.

From Example 6-8, Example 6-9, and Example 5-5, it can be learned that when (CD-P) × 100% ≤σ and 1.8 ≤ M ≤ 4.0, the cycling performance of the lithium-ion battery is also further improved.

From Example 6-10 to Example 6-15 and Example 5-5, it can be learned that when (CD-P) × 100% ≤ σ ≤ 40% and 1.8 ≤ M ≤ 4.0, that is, the foregoing parameters are jointly controlled within the ranges defined in this application, the cycling performance of the lithium-ion battery is significantly improved. It indicates that a secondary battery with excellent cycling performance can be obtained more easily when the compacted density of the negative electrode material, the compacted density of the negative electrode plate, the porosity of the negative electrode plate, and the capacity per unit area of a single side surface of the negative electrode plate are jointly controlled within the ranges defined in this application.

The foregoing descriptions are merely preferable embodiments of this application, but are not intended to limit this application. Any modification, equivalent replacement, or improvement made without departing from the spirit and principle of this application shall fall within the protection scope of this application.

**Claims**

1. A negative electrode material, wherein a button battery containing the negative electrode material has a charge gram capacity of Cap.C mAh/g and a discharge gram capacity of Cap.D mAh/g, wherein 13 ≤ Cap.C-Cap.D ≤ 18, 335.0 ≤ Cap.C ≤ 355.0, and 320.0 ≤ Cap.D ≤ 340.0;

wherein a degree of graphitization of the negative electrode material is G, 84.0% ≤ G ≤ 97.0%;
wherein a specific surface area of the negative electrode material is BET m$^2$/g, wherein the specific surface area and a particle size distribution of $D_n10$ of the negative electrode material satisfy 0.5 ≤ 0.5 × BET-$D_n10$ ≤ 2.

2. The negative electrode material according to claim 1, wherein a compacted density of the negative electrode material is CD g/cm$^3$ after being pressed under a pressure of $5 \times 10^3$ kg, $1.60 \leq CD \leq Cap.D/187.88$.

3. The negative electrode material according to claim 1 or 2, wherein the particle size distribution of the negative electrode material satisfies $D_v99 \leq 3.0 \times D_v50 \leq 50.0$ μm and $D_v90/D_v50 \leq 2.5$.

4. The negative electrode material according to any one of claims 1 to 3, wherein a tap density of the negative electrode material is TD g/cm$^3$, wherein $0.8 \leq TD \leq 1.2$, and an OI value of the negative electrode material is 3 to 8.

5. The negative electrode material according to any one of claims 1 to 4, wherein the negative electrode material satisfies at least one of the following conditions:

$$(1)\ 0.8 \leq 0.5 \times BET{-}D_n10 \leq 1.7;$$

or

$$(2)\ 0.8\ \mu m \leq D_n10 \leq 1.4\ \mu m.$$

6. The negative electrode material according to any one of claims 3 to 5, wherein the negative electrode material satisfies at least one of the following conditions:

$$(1)\ 1.7 \leq D_v90/D_v50 \leq 2.1;$$

or

$$(2)\ 30\ \mu m \leq D_v99 \leq 45\ \mu m.$$

7. The negative electrode material according to any one of claims 1 to 6, wherein a specific surface area BET m$^2$/g of the negative electrode material is 3.0 m$^2$/g to 6.0 m2/g.

8. The negative electrode material according to any one of claims 1 to 7, wherein $15 \leq Cap.C{-}Cap.D \leq 18$.

9. A secondary battery, comprising a positive electrode plate, an electrolytic solution and a negative electrode plate; wherein the negative electrode plate comprises a negative electrode material layer and a negative electrode current collector, and the negative electrode material layer comprises the negative electrode material according to any one of claims 1 to 8.

10. The secondary battery according to claim 9, wherein a compacted density of the negative electrode plate is P g/cm$^3$, $1.40 \leq P \leq 1.70$.

11. The secondary battery according to claim 9 or 10 wherein a capacity per unit area of a single side surface of the negative electrode plate is M mAh/cm$^2$, $1.8 \leq M \leq 4.0$.

12. The secondary battery according to any one of claims 9 to 11, wherein a porosity of the negative electrode plate is σ and a compacted density of the negative electrode material is CD g/cm$^3$ after being pressed under a pressure of $5 \times 10^3$ kg, $(CD{-}P) \times 100\% \leq \sigma \leq 40\%$.

13. An electric apparatus, comprising the secondary battery according to any one of claims 9 to 12.